# EUROPÄISCHE PATENTSCHRIFT

(11) **EP 1 717 549 B1**
(45) Veröffentlichungstag und Bekanntmachung des Hinweises auf die Patenterteilung: **05.01.2011**
(21) Anmeldenummer: 06112619.9
(22) Anmeldetag: 13.04.2006
(51) Int. Cl.: G01C 15/00

(54) **Neigbarer Baulaser**
Inclinable construction laser
Laser de construction inclinable

(30) Priorität: 29.04.2005 DE 102005000048
(43) Veröffentlichungstag der Anmeldung: 02.11.2006
(73) Patentinhaber: HILTI Aktiengesellschaft, 9494 Schaan (LI)
(72) Erfinder: Ammann, Manfred, 6923, Lauterach (AT); Kousek, Heinz, 6800, Feldkirch (AT)
(74) Vertreter: Wildi, Roland

(56) Entgegenhaltungen:
- US-A- 5 485 266
- US-A- 5 713 135
- US-A- 5 841 527
- US-A- 6 012 229

## Beschreibung

Die Erfindung betrifft einen neigbaren Baulaser, insbesondere einen neigbaren Rotationsbaulaser mit einem zumindest segmentweise innerhalb einer Ebene bewegten Laserstrahl.

Baulaser mit einem ausgefächerten oder mit mehreren, eine Ebene aufspannenden Laserstrahlen sowie Rotationsbaulaser mit einem zumindest segmentweise innerhalb einer Ebene bewegten Laserstrahl werden vor allem im Baugewerbe eingesetzt, um auf Wänden, Decken und Böden horizontale, vertikale oder definiert geneigte Ebenen festzulegen. Dabei werden insbesondere bei der Nivellierung von horizontalen und vertikalen Ebenen hohe Anforderungen an die Ausrichtung am Schwerefeld der Erde mit maximalen Abweichungen von kleiner 10" (Winkelsekunden) Gesamtfehler des Systems gestellt. Davon entfallen ca. 3" bis 5" auf die Sensoren selbst. Andererseits ist bei Neigungen zum Schwerefeld mit bis zu 20 % und mehr (in Abhängigkeit von der Neigung) eine maximale Abweichungen von ca. 50 Winkelsekunden bis 200 Winkelsekunden praktisch hinreichend.

Nach der EP0715707 ist ein Mehrachslaser bekannt, der sich am Schwerefeld der Erde ausrichtet. Je zwei der fünf Laserstrahlen spannen eine horizontale bzw. vertikale Ebene auf. Nach der US5539990 ist jeder einzelne Laserstrahl zusätzlich horizontal und vertikal aufgefächert.

Nach der DE4406914 weist ein Rotationsbaulaser eine in einem Montagerahmen angeordnete Lasereinheit auf, deren Laserstrahl etwa um 90° von einer Umlenkeinrichtung umlenkbar ist, die in einem Rotationsteil um eine Drehachse drehbar gelagert ist, welche sich mit der Strahlachse des umgelenkten Laserstrahls schneidet, wobei die Ebene in einer dazu senkrechten Schwenkebene beliebig um eine Schwenkachse neigbar ist.

Nach der US6804892 ist bei einem neigbaren Rotationsbaulaser mit einem um zwei zueinander senkrechte Neigungsachsen neigbaren Statorteil je Neigungsachse ein Nivelliersensor zur hochgenauen Ausrichtung eines neigbaren Messrahmens am Schwerefeld und ein Winkelsensor zur hochgenauen Messung des Neigungswinkels zwischen dem Statorteil und dem Messrahmen angeordnet. Der Messrahmen ist als weitere neigbare Baugruppe technologisch aufwendig. Zudem addieren sich bei dieser mittelbaren Bestimmung der Neigung die Fehler des Nivelliersensors und des Winkelsensors zu einem Gesamtfehler auf.

Nach der US 5485266 sind am neigbaren Messrahmen zwei Nivelliersensoren je Neigungsachse vorhanden, die definiert zueinander verschwenkbar sind um eine Lasereinheit zu nivellieren.

Zusätzlich weist die Lasereinheit zwei zur Schwenkachse sensitiven Neigungssensoren zur Messung eines Neigungswinkels auf.

Nach der DE10325859 ist die Ebene des Laserstrahls in zwei zueinander senkrechten Schwenkebenen neigbar, indem die in einer Kugelkalottenlagerung neigbar im Montagerahmen gelagerte Drehachse mitsamt der Lasereinheit und der Umlenkeinrichtung über zwei Stellantriebe gegenüber dem zumeist horizontal ausgerichteten Gehäuse geneigt wird. Dabei ist ein Statorteil mit je genau einer integrierten Nivellier-Libelle über je ein mit diesem fest verbundenes Neigungsführungsmittel an zwei rechtwinklig im Montagerahmen angeordneten Neigungsführungskonturen jeweils einseitig formschlüssig führbar. Da über die hochgenaue Nivellier-Libelle nur kleine Neigungswinkel zum Schwerefeld direkt messbar sind, werden grössere Neigungswinkel mittelbar über einen bekannten Versetzungsweg der Stellantriebe bestimmt.

Zudem sind übliche bezüglich der Neigung zum Schwerefeld sensitive Sensoren auf der Basis von ein- oder zweidimensional sensitiven Nivellier-Libellen mit unterschiedlicher Winkelauflösung und Neigungsmessbereich bekannt, wobei sich Winkelauflösung und Neigungsmessbereich üblicherweise gegensinnig zueinander verhalten.

Die Aufgabe der Erfindung besteht in der Realisierung eines technologisch einfachen, neigbaren Baulasers mit direkter Messung der Neigung auch grösserer Neigungswinkel.

Die Aufgabe wird im Wesentlichen durch die Merkmale des unabhängigen Anspruchs 1 gelöst. Vorteilhafte Weiterbildungen ergeben sich aus den Unteransprüchen.

So weist ein Baulaser mit einem Gehäuse und zumindest einem, eine Ebene aufspannenden, Laserstrahl und einer Lasereinheit, die bezüglich des Gehäuses um zumindest eine Schwenkachse neigbar ist und sensitiv zu dieser zumindest einen Nivelliersensor zur hochgenauen Ausrichtung der Lasereinheit am Schwerefeld, der eine hohe Winkelauflösung und einen engen Messbereich aufweist, sowie zumindest einen Neigungssensor zur direkten Messung eines Neigungswinkels der Lasereinheit zum Schwerefeld auf, wobei der Neigungssensor eine geringere Winkelauflösung und einen weiteren Messbereich als der Nivelliersensor aufweist.

Durch das Vorhandensein beider bezüglich Winkelauflösung und Neigungsmessbereich unterschiedlicher Sensoren, dem Nivelliersensor mit einer hohen Winkelauflösung bei engem Neigungsmessbereich sowie dem Neigungssensor mit einer geringeren Winkelauflösung bei weiterem Neigungsmessbereich, kann je nach Anwendungsfall in der geforderten Genauigkeit bei dem benötigten Wertebereich auf technologisch einfache Weise die Neigung zum Schwerefeld direkt bestimmt werden.

Vorteilhaft ist die Lasereinheit um zwei, weiter vorteilhaft zueinander senkrecht angeordnete, Neigungsachsen neigbar, wobei bezüglich beider Neigungsachsen sensitive Sensoren vorhanden sind, weiter vorteilhaft zweidimensional sensible Sensoren, wodurch mit fixierten Neigungsachsen auch Neigungen der Ebene um eine virtuelle Neigungsachse einstellbar sind.

Vorteilhaft sind je Neigungsachse sensitiv zu dieser je zumindest ein Nivelliersensor und zumindest ein Neigungssensor angeordnet, wodurch separierbare eindimensional sensible Sensoren verwendbar sind.

Vorteilhaft ist zwischen den Sensoren und einem mit diesen informationsübertragend verbundenem Rechenmittel zur Verarbeitung der Messwerte ein Multiplexer zur seriellen Messwerterfassung angeordnet, wodurch dieselbe Auswerteelektronik für mehrere, weiter vorteilhaft alle Sensoren verwendbar ist.

Vorteilhaft ist das Rechenmittel mit zumindest einem Stellantrieb zur Verschwenkung der Lasereinheit zum Gehäuse um eine Schwenkachse steuerbar verbunden, wodurch in Bezug zur Neigung der Ebene übliche Zustellalgorithmen und Regelalgorithmen von Baulasern ausführbar sind.

Vorteilhaft ist der Baulaser als Rotationsbaulaser mit einem zumindest segmentweise innerhalb der Ebene bewegten Laserstrahl ausgebildet, wodurch die definiert geneigte Ebene im zeitlichen Mittel zumindest segmentweise vom Laserstrahl überstrichen wird.

Vorteilhaft ist der Baulaser als Linienrotationsbaulaser mit zumindest einem, in die Ebene aufgefächerten, Laserstrahl ausgebildet, der zumindest segmentweise innerhalb der Ebene bewegt wird, wodurch im Stillstand der Rotation die statische Markierung sichtbar bleibt.

Alternativ vorteilhaft ist der Baulaser als Linienlaser mit zumindest einem, in die Ebene aufgefächerten, Laserstrahl ausgebildet, wodurch die definiert geneigte Ebene über eine statische Markierung (Linie, Punktreihe, etc.) markierbar ist.

Alternativ vorteilhaft ist der Baulaser als Mehrachslaser mit zumindest zwei, die Ebene aufspannenden, Laserstrahlen ausgebildet, wodurch die definiert geneigte Ebene über (weithin sichtbare) Einzelpunkte markierbar ist.

Die Erfindung wird bezüglich mehrer vorteilhafter Ausführungsbeispiele näher erläutert mit
- Fig.: 1 als schematische Darstellung eines Baulasers.
- Fig. 2: als alternative Lasereinheit
- Fig. 3: als alternative Lasereinheit
- Fig. 4: als alternative Lasereinheit

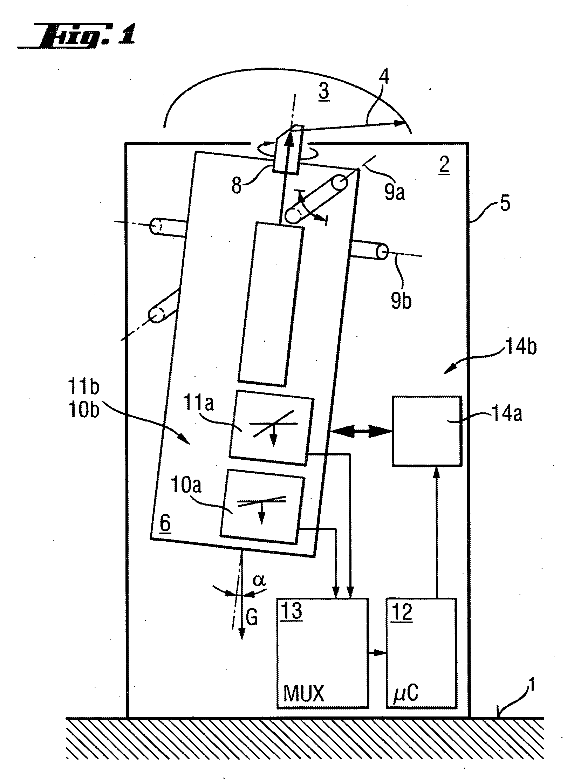

Nach Fig. 1 weist ein auf einer Standfläche 1 aufgestellter Baulaser 2 in Form eines Rotationsbaulasers mit einem kontinuierlich innerhalb einer Ebene 3 rotierenden Laserstrahl 4 in einem Gehäuse 5 eine Lasereinheit 6 mit einer Laserlichtquelle 7 und einem rotierenden Umlenkprisma 8 auf. Die Lasereinheit 6 ist bezüglich des Gehäuses 5 um eine Schwenkachse 9a neigbar. Jeweils sensitiv zu dieser Schwenkachse 9a ist in der Lasereinheit 6 ein Nivelliersensor 10a mit einer hohen Winkelauflösung bei engem Neigungsmessbereich zur hochgenauen Ausrichtung der Lasereinheit 6 am Schwerefeld G sowie ein Neigungssensor 11a mit einer geringeren Winkelauflösung bei weiterem Neigungsmessbereich zur direkten Messung eines Neigungswinkels [alpha] der Lasereinheit 6 zum Schwerefeld G vorhanden. Zwischen den eindimensional sensitiven Sensoren (Nivelliersensor 10a und Neigungssensor 11a) und einem mit diesen informationsübertragend verbundenem Rechenmittel 12 zur Verarbeitung der Messwerte ist ein Multiplexer 13 zur seriellen Messwerterfassung angeordnet. Das Rechenmittel 12 in Form eines Mikrocontrollers ist mit einem Stellantrieb 14a zur Verschwenkung der Lasereinheit 6 zum Gehäuse 5 um die Schwenkachse 9a steuerbar verbunden. Die Lasereinheit 6 ist um genau zwei, zueinander senkrecht angeordnete, Neigungsachsen 9a, 9b neigbar, wobei die zur zweiten Neigungsachse 9b eindimensional sensitiven Sensoren (Nivelliersensor 10b und Neigungssensor 11 b) und der um diese zweite Neigungsachse 9b wirksame Stellantrieb 14b senkrecht zur Darstellungsebene angeordnet und deshalb nicht baulich jedoch als beinhaltet durch Bezugszeichen angedeutet sind. Für weitere konstruktive Einzelheiten des neigbaren Rotationsbaulasers sei der Fachmann auf die DE10325859 verwiesen, deren Offenbarungsgehalt mit einbezogen wird.

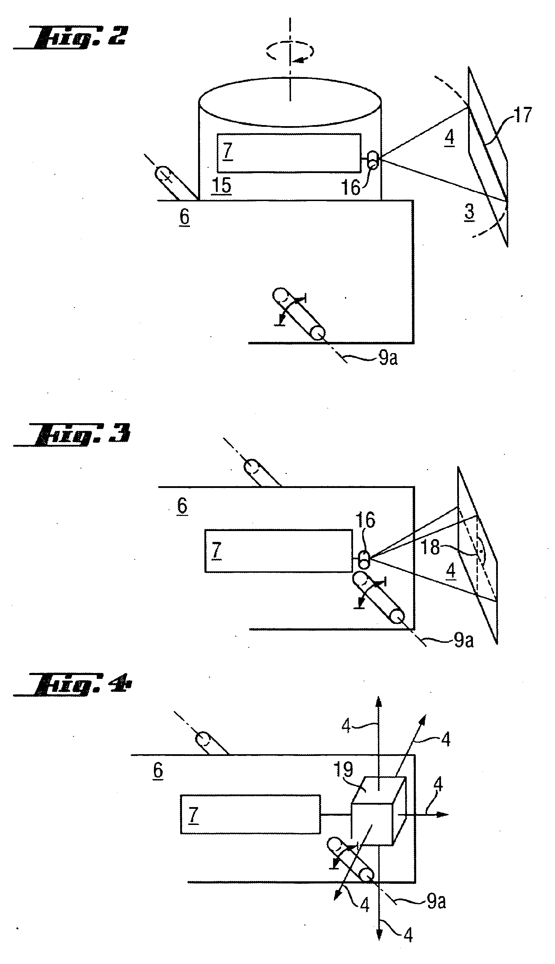

Nach Fig. 2 weist die um eine Schwenkachse 9a neigbare Lasereinheit 6 eines Linienrotationsbaulasers einen senkrecht zur Schwenkachse 9a drehbaren Drehkopf 15 auf, welcher die Laserlichtquelle 7 beinhaltet. Der aus der Laserlichtquelle 7 austretende Laserstrahl 4 ist über einen Strahlsplitter 16 in einen innerhalb der Ebene 3 liegenden, stetigen Linienstrahl aufgefächert, der (wie dargestellt) auch bei nicht drehendem Drehkopf 15 eine statische Markierungslinie 17 erzeugt.

Nach Fig. 3 weist die um eine Schwenkachse 9a neigbare Lasereinheit 6 eines Linienlasers die Laserlichtquelle 7 auf, wobei der aus der Laserlichtquelle 7 austretende Laserstrahl 4 über einen Strahlsplitter 16 in zwei zueinander senkrecht orientierte, diskret punktierte Linienstrahlen aufgefächert ist, die ein punktiertes Markierungskreuz 18 erzeugt.

Nach Fig. 4 weist die um eine Schwenkachse 9a neigbare Lasereinheit 6 eines Mehrachslasers die Laserlichtquelle 7 auf, wobei der aus der Laserlichtquelle 7 austretende Laserstrahl 4 über einen Strahteiler 19 in fünf, jeweils zueinander senkrecht orientierte, Einzelstrahlen aufgeteilt ist.

## Patentansprüche

1. Baulaser mit einem Gehäuse (5) und zumindest einem, eine Ebene (3) aufspannenden, Laserstrahl (4) und einer Lasereinheit (6), die bezüglich des Gehäuses (5) um zumindest eine Schwenkachse (9a) neigbar ist und sensitiv zu dieser zumindest einen Nivelliersensor (10a) zur hochgenauen Ausrichtung der Lasereinheit (6) am Schwerefeld (G) aufweist, wobei der Nivelliersensor (10a) eine hohe Winkelauflösung und einen engen Messbereich aufweist, **dadurch gekennzeichnet, dass** die Lasereinheit (6) zusätzlich zum Nivelliersensor (10a) zumindest einen zur Schwenkachse (9a) sensitiven Neigungssensor (11a) zur direkten Messung eines Neigungswinkels ([alpha]) der Lasereinheit (6) zum Schwerefeld (G) aufweist, wobei der Neigungssensor (11a) eine geringere Winkelauflösung und einen weiteren Messbereich als der Nivelliersensor (10a) aufweist.

2. Baulaser nach Anspruch 1, **dadurch gekennzeichnet, dass** die Lasereinheit (6) um zwei Neigungsachsen (9a, 9b) neigbar ist, wobei bezüglich beider Neigungsachsen (9a, 9b) sensitive Sensoren (10a, 10b, 11a, 11 b) vorhanden sind.

3. Baulaser nach Anspruch 2, **dadurch gekennzeichnet, dass** je Neigungsachse (9a, 9b) sensitiv zu dieser je zumindest ein Nivelliersensor (10a, 10b) und zumindest ein Neigungssensor (11 a, 11 b) angeordnet sind.

4. Baulaser nach einem der vorhergehenden Ansprüche, **dadurch gekennzeichnet, dass** zwischen den Sensoren und einem mit diesen informationsübertragend verbundenem Rechenmittel (12) zur Verarbeitung der Messwerte ein Multiplexer (13) zur seriellen Messwerterfassung angeordnet ist.

5. Baulaser nach Anspruch 4, **dadurch gekennzeichnet, dass** das Rechenmittel (12) mit zumindest einem Stellantrieb (14a) zur Verschwenkung der Lasereinheit (6) zum Gehäuse (5) um eine Schwenkachse (9a) steuerbar verbunden ist.

6. Baulaser nach einem der vorhergehenden Ansprüche, **dadurch gekennzeichnet, dass** er als Rotationsbaulaser mit einem zumindest segmentweise innerhalb der Ebene (3) bewegten Laserstrahl (4) ausgebildet ist.

7. Baulaser nach Anspruch 6, **dadurch gekennzeichnet, dass** er als Linienrotationsbaulaser mit zumindest einem, in der Ebene (3) aufgefächerten, Laserstrahl (4) ausgebildet ist.

8. Baulaser nach einem der Ansprüche 1 bis 5, **dadurch gekennzeichnet, dass** er als Linienlaser mit zumindest einem, in der Ebene (3) aufgefächerten, Laserstrahl (4) ausgebildet ist.

9. Baulaser nach einem der vorhergehenden Ansprüche 1 bis 5, **dadurch gekennzeichnet, dass** er als Mehrachslaser mit zumindest zwei, die Ebene (3) aufspannenden, Laserstrahlen (4) ausgebildet ist.

## Claims

1. Construction laser having a housing (5), at least one laser beam (4) which defines a plane (3), and a laser unit (6) which can be inclined relative to the housing (5) on at least one axis of inclination (9a) and which has at least one levelling sensor (10a), sensitive relative to the said axis of inclination (9a), for aligning the laser unit (6) with the gravitational field (G) with high precision, the levelling sensor (10a) having a high angular resolution and a narrow range of measurement, **characterised in that** the laser unit (6) has, in addition to the levelling sensor (10a), at least one inclination sensor (11a) sensitive relative to the axis of inclination (9a) for the direct measurement of an angle of inclination (alpha) of the laser unit (6) relative to the gravitational field (G), the inclination sensor (11a) having a lower angular resolution and a wider range of measurement than the levelling sensor (10a).

2. Construction laser according to claim 1, **characterised in that** the laser unit (6) is able to be inclined on two axes of inclination (9a, 9b), sensors (10a, 10b, 11a, 11b) which are sensitive relative to both axes of inclination (9a, 9b) being present.

3. Construction laser according to claim 2, **characterised in that**, for each axis of inclination (9a, 9b), at least one levelling sensor (10a, 10b) and at least one inclination sensor (11a, 11b) are arranged to be sensitive relative to the said axis of inclination (9a, 9b).

4. Construction laser according to one of the preceding claims, **characterised in that** a multiplexer (13) for the serial acquisition of measured values is arranged between the sensors and a calculating means (12) for processing the measured values which is in information-transmitting connection with the said sensors.

5. Construction laser according to claim 4, **characterised in that** the calculating means (12) is connected in such a way that control can be exerted to at least one positioning drive (14a) for pivoting the laser unit (6) relative to the housing (5) on an axis of inclination (9a).

6. Construction laser according to one of the preceding claims, **characterised in that** it takes the form of a rotary construction laser having at least one laser beam (4) which is moved in the plane (3) at least sector by sector.

7. Construction laser according to claim 6, **characterised in that** it takes the form of a line and rotary construction laser having at least one laser beam (4) which is fanned in the plane (3).

8. Construction laser according to one of claims 1 to 5, **characterised in that** it takes the form of a line laser having at least one laser beam (4) which is fanned in the plane (3).

9. Construction laser according to one of preceding claims 1 to 5, **characterised in that** it takes the form of a multiaxis laser having at least two laser beams (4) which define the plane (3).

## Revendications

1. Laser de construction comportant un boîtier (5) et au moins un faisceau laser (4) définissant un plan (3), et une unité laser (6) inclinable par rapport au boîtier (5) autour d'au moins un axe de pivotement (9a) et comportant un détecteur de niveau (10a) sensible à ce au moins un axe de pivotement pour une orientation très précise de l'unité laser (6) vers le champ de gravitation (G), dans lequel le détecteur de niveau (10a) a une résolution angulaire élevée et une plage de mesure étroite, **caractérisé en ce que** l'unité laser (6) comporte, en plus du détecteur de niveau (10a), au moins un détecteur d'inclinaison (11a) sensible à l'axe de pivotement (9a) pour une mesure directe d'un angle d'inclinaison ([alpha]) de l'unité laser (6) par rapport au champ de gravitation (G), dans lequel le détecteur d'inclinaison (11a) a une résolution angulaire plus petite et une plage de mesure plus grande que le détecteur de niveau (10a).

2. Laser de construction selon la revendication 1, **caractérisé en ce que** l'unité laser (6) peut être inclinée autour de deux axes d'inclinaison (9a, 9b), dans lequel des détecteurs (10a, 10b, 11a, 11b) sensibles aux deux axes d'inclinaison (9a, 9b) sont présents.

3. Laser de construction selon la revendication 2, **caractérisé en ce qu'**au moins un détecteur de niveau (10a, 10b) et au moins un détecteur d'inclinaison (11a, 11b) sont agencés sur chaque axe d'inclinaison (9a, 9b) de manière à être sensibles à ceux-ci.

4. Laser de construction selon l'une quelconque des revendications précédentes, **caractérisé en ce qu'**un multiplexeur (13) pour l'acquisition en série de valeurs de mesure est agencé entre les détecteurs et des moyens de calcul (12) connectés à ceux-ci de manière à transmettre des informations, lesquels moyens de calcul étant destinés au traitement des valeurs de mesure.

5. Laser de construction selon la revendication 4, **caractérisé en ce que** les moyens de calcul (12) sont reliés de manière à être pouvoir être commandés à au moins un actionneur (14a) pour faire pivoter l'unité laser (6) par rapport au boîtier (5) autour d'un axe de pivotement (9a).

6. Laser de construction selon l'une quelconque des revendications précédentes, **caractérisé en ce qu'**il est configuré sous la forme d'un laser de construction rotatif comportant un faisceau laser (4) qui peut être déplacé au moins par segments dans le plan (3).

7. Laser de construction selon la revendication 6, **caractérisé en ce qu'**il est configuré sous la forme d'un laser de construction rotatif linéaire comportant au moins un faisceau laser (4) sortant dans le plan (3).

8. Laser de construction selon l'une quelconque des revendications 1 à 5, **caractérisé en ce qu'**il est configuré sous la forme d'un laser linéaire comportant au moins un faisceau laser (4) sortant dans le plan (3).

9. Laser de construction selon l'une quelconque des revendications 1 à 5 précédentes, **caractérisé en ce qu'**il est configuré sous la forme d'un laser multiaxial comportant au moins deux faisceaux laser (4) définissant le plan (3).
